(19) **Europäisches Patentamt**
**European Patent Office**
**Office européen des brevets**

(11) **EP 2 624 013 B1**

(12) **EUROPEAN PATENT SPECIFICATION**

(45) Date of publication and mention
of the grant of the patent:
**19.11.2014 Bulletin 2014/47**

(51) Int Cl.:
***G01S 19/54*** *(2010.01)*

(21) Application number: **12153398.8**

(22) Date of filing: **31.01.2012**

(54) **Method for Determining the Heading of a Moving Object**

Verfahren zur Bestimmung des Kurses eines beweglichen Objekts

Procédé pour déterminer la trajectoire d'un objet en mouvement

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.08.2013 Bulletin 2013/32**

(73) Proprietor: **Amconav GmbH**
**82205 Gilching (DE)**

(72) Inventors:
• **Henkel, Patrick, Dr.**
**82275 Emmering (DE)**

• **Jurkowski, Patryk**
**86807 Buchloe (DE)**

(74) Representative: **Herrmann, Franz**
**Dendorfer & Herrmann**
**Patentanwälte Partnerschaft**
**Bayerstrasse 3**
**80335 München (DE)**

(56) References cited:
**US-A- 5 406 489      US-A1- 2003 149 512**
**US-A1- 2005 137 799      US-A1- 2008 027 645**
**US-B1- 6 259 398**

**Description**

Method for Determining the Heading of a Moving Object

The invention relates to a method for determining the heading of a moving object using two receivers of a satellite navigation system, in which both receivers are attached to a moving object, in which the receivers perform code and phase measurements on signals emitted by satellites of the satellite navigation system, and in which an evaluation unit connected to the receivers determines the heading of the moving object.

The invention further refers to a receiver arranged for performing the method.

The term "heading" as used herein refers to the moving direction, in which the object is moving along the earth surface, in contrast to the elevation, which is the angle between the moving direction of the object and the earth surface at the position of the object. In local coordinates, the heading is generally expressed as the angle between the moving direction and the north direction.

There exist two kind of systems for attitude determination today: The first kind is an inertial navigation system, which includes motion sensors (accelerometer), rotation sensors (gyroscopes) and microprocessors to calculate the position, orientation and velocity of a a moving object without the need for external references. Ring laser gyroscopes are high precision inertial navigation systems, which send two laser beams in opposite directions in a closed circular path and measure the phase shift between the two beams with an interferometer [1].

If the gyroscope is rotating, then one beam has to travel a longer distance and the other beam a respectively smaller distance to reach the interferometer. This results in a phase shift that can be translated into a rotation angle.

Inertial navigation systems suffer from the integration drift [5]: small errors in the measurement of acceleration and angular velocity are integrated into progressively larger errors in velocity, which accumulate to even larger errors in position. For simple MEMS, the angular drift varies between $0.01° / h$ and $1° / s$ . For the more sophisticated and expensive laser gyroscopes, the drift varies between $0.001° / h$ and $1° / h$ . This drift results in position errors between 0.05 and 3 nautical miles per hour. Consequently, inertial navigation systems need a period position correction from some other navigation system, e.g. a satellite navigation system.

The second kind of attitude determination systems uses satellite navigation (e.g. GPS, Galileo). High precision geodetic satellite navigation receivers derive the position, velocity and attitude from the carrier phases, which requires a resolution of an integer ambiguity for each satellite as the carrier phase is period with a wavelength of 19.0 cm.

For precise relative positioning, one commonly uses double difference carrier phase measurements as souble difference carrier phase measurements eliminate both receiver and satellite clock offsets and atmospheric delays for short baseline lengths. A method for precise relatice positioning has been disclosed by Teunissen [2][3]. In the known method, the phase ambiguities of the carrier phase measurements and the coefficients of a rotation matrix, which describes the orientation of the baseline in a local coordinate system, are determined by a least square minimization, which is the equivalent of a constrained integer least-squares optimization. This problem is solved in four steps: First, an unconstrained least-squares float solution is computed. Secondly, a search is performed to find a set of integer candidate vectors. As the ambiguities of the float solution are heavily correlated, Teunissen proposed an integer decorrelation in [4] to decorrelate the search space, and then to perform the integer fixing in the decorrelated search space. Once a set of integer candidates is found, conditional baseline estimates are determined for each integer candidate. Teunissen solved the constrained least-squares optimization in [3] by a Lagrange optimization. Finally, Teunissen used the obtained integer candidates and rotation matrice for selecting the estimates of minimum error norm.

The known method according to Teunissen [2] [3] need to resolve the carrier phase integer ambiguities, which can only be performed with expensive geodetic receivers. Only these receivers track the phases continuously such that the integer ambiguities can be resolved. Moreover, both receivers have to be synchronized to each other to maintain the integer property of ambiguities. Low cost navigation chips and antennas as used in smartphones and automobile navigation devices do not provide any timing input and can not track the phase reliably, which prevents the application of the constrained integer least-squares algorithm of Teunissen [2] [3].

US-B-6.259.398 which is considered to present the closest state of the art and which is used for the two-part form delimitation of claim 1 describes double difference carrier phase measurement and adjust the search space with the known antenna baseline and with other available information, e.g. an angle limit; but it does not refer to further available information to be used for limiting the search space. US-A-5.406.489 measures the attitude of an aircraft in a recursive development, thus using times t and t-1. Nevertheless, it uses only on GPS receiver together with accelerometer sensors. US-A-2005/137799 measures the attitude/heading of a vehicle by carrier phase measurement over a baseline (two GPS receiver). The search space to eliminate carrier phase ambiguity is constrained by some angle corridors and the baseline shortening.

Proceeding from this related art, the present invention seeks to provide a reliable method for method for determining the heading of a moving object.

This object is achieved by a method having the features of the independent claim. Advantageous embodiments and refinements are specified in claims dependent thereon.

In the method for determining the heading of a moving object, the evaluation unit performs the steps of:

- determining subsequent absolute positions of at least one receiver based on code measurements of the at least one receiver;
- fitting a trajectory to a series of the subsequent absolute positions,
- calibrating a baseline extending between one of the receivers and another receiver by using the trajectory and a priori known information on positional parameters of the baseline for determining unknown positional parameters of the baseline;
- using the positional parameters of the baseline for calibrating double difference phase measurements of both receivers by determining a phase corrector which eliminates phase ambiguities of the double difference phase measurements;
- calibrating double difference phase measurements by means of the phase corrector; and
- using the calibrated double difference phase measurements for determining the heading of the baseline.

In the method, the relatively inaccurate absolute position measurements are used for determining the position of the baseline with such accuracy that a phase corrector for the phase ambiguities of the double difference phase measurements can be determined. The double difference phase measurements can then be calibrated by means of the phase calibrator. In consequence, the phase ambiguities must not be resolved for the double difference phase measurement. But the calibrated double difference phase measurements can be used for determining the heading of the baseline with high accuracy. The main advantage of this method is, that the heading can be precisely determined, even if receivers are used, which are unable to track phases in a reliable manner.

The subsequent absolute positions and the trajectory can be determined in geocentric, geodetic or local coordinates depending on the specific requirements of the application.

Since object such as vehicle are generally moving in a smooth manner, the trajectory of the object can usually approximated by a polynom having one of the coordinates as variable. The polynom is then fitted to the subsequent absolute positions.

The baseline can be calibrated by fixing the position of one of the two receivers along the trajectory and by searching for a position of the other receiver along the trajectory under the condition that at least one positional parameter excluding the heading assumes an a priori known value, in particular under the condition that the length and the elevation of the baseline assume a prior known values. The result of such a calibration process is accurate determination of the position and attitude of the baseline.

It is a particular advantage of the method, that the phase corrector can not only be determined such that the phase ambiguities are eliminated but also such that all other error terms including receiver and satellite clock offsets, receiver and satellite biases, and atmospheric errors can be eliminated by the phase corrector.

For increasing the accuracy of the phase corrector, the phase corrector can be calculated as a mean value of previously determined phase correctors.

The heading of the baseline can be determined by an iterative least-squares estimation using a linearization of the double difference phase measurements around an initial value of the heading and using a priori information on at least one further positional parameter of the baseline.

After the double difference phase measurements have been calibrated, the changes of the double difference phase measurements are tracked or coasted. The double difference phase measurements are further monitored for phase slips and unexpected variations. Variations of the phase that are due to phase jumps can thus be eliminated during the tracking.

Variations of the phase due to phase jumps can be detected by verifying whether a change of the double difference phase measurements occurs within predefined boundaries around the value of a full phase cycle, since the phase ambiguities change by integer numbers during a phase jump. The difference of the phase before and after a phase jump must therefore correspond to a full phase cycle. Such variations of the phase are treated as a phase slip or phase jump and added to the phase corrector.

Double difference phase measurement, whose phase change cannot be treated as a phase slip, can be replaced by a value obtained from an extrapolation based on previous double difference phase measurements.

Double phase difference phase measurements, whose change with respect to a previous double difference phase measurement exceeds an expectation level, may trigger a recalibration of the baseline and/or a recalibration of the double difference phase measurements.

The expectation level decreases with increasing velocity of the moving object, since at high velocity a sudden phase change is less likely than at low velocities of the moving obj ect.

Double phase difference phase measurements taking into account phase measurements on signals emitted by a newly tracked satellite can also be calibrated using the calibrated baseline. Thus phase correctors are immediately available after a satellite becomes tracked.

The accuracy of the heading of the baseline can be further increased by using a recursive state estimator such as a recursive least square estimator. Such a recursive state estimator is generally a Kalman filter.

Further advantages and properties of the present invention are disclosed in the following description, in which exemplary embodiments of the present invention are explained in detail based on the drawings:

Figure 1 illustrates a global navigation satellite system, which is used for determining the heading of a moving object;

Figure 2 is a flow diagram of the method;

Figure 3 is a flow diagram of the calibration process of the method from Figure 2;

Figure 4 illustrates absolute positions of a receiver and a smoothed trajectory of the receiver;

Figure 5 illustrates the search of a baseline along the smoothed trajectory;

Figure 6 is a diagram showing typical phase jumps;

Figure 7 is a picture showing the effect of phase jumps on the determination of the heading; and

Figure 8 is a diagram depicting the estimation of the heading over time.

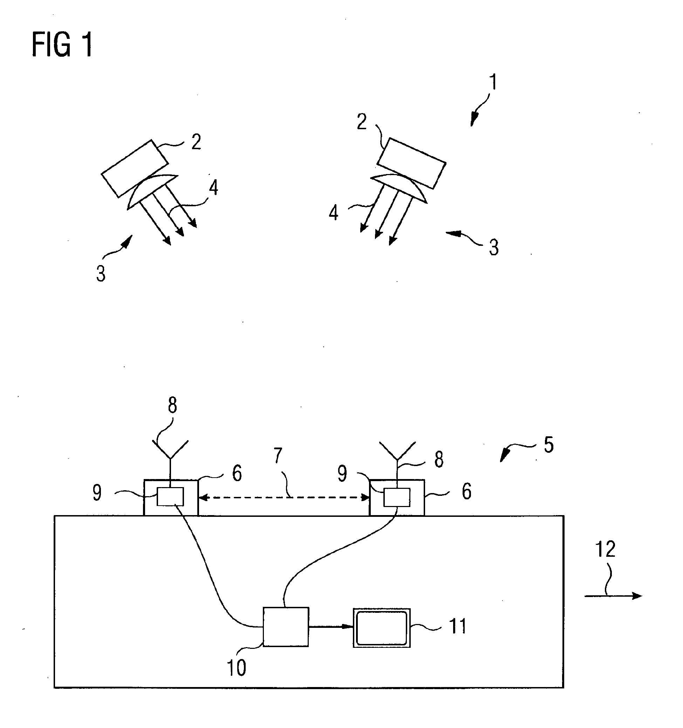

Figure 1 shows a Global Navigation Satellite System ( = GNSS) 1, which comprises satellites 2, which are orbiting around the earth and emit satellite signals 3, which are modulated on a number of carrier signals 4.

For determining the heading of a moving object 5, receivers 6 are attached to the object 5. The object 5 may be an airborne vehicle, such as an airplane or a vehicle moving on the surface of the earth such as a road vehicle or a ship. It should be noted that the object 5 may also be a freight suspended from a crane or helicopter, wherein one of the receivers is attached to the freight and the other receiver is attached to the crane or helicopter.

The receivers 6 define a baseline 7, which extends between both receivers 6, in particular between antennas 8 of the receivers 6. It should be noted, that the vehicle 5 may also be provided with more than two receivers 6. Then each pair of receivers 6 extends a separate baseline. Having more than one baseline 7 can be necessary, if the complete orientation of the object 5 must be determined in space.

Navigation signals received by the receivers 5 are processed in signal processors 9. In particular, well known code measurements and carrier phase measurements are performed. The code and carrier phase measurement are provided to an evaluation unit 10, which uses the code and phase measurements for determining the heading of the vehicle 5, which moves in a moving direction 12. The results can be shown on a display 11 or be used otherwise for controlling the motion of the vehicle 5.

In the embodiment shown in Figure 1, the baseline 7 is attached to the object 5 such, that the baseline 7 aligns with the moving direction 12, in which the object 5 is moving. Thus the attitude of the baseline 7 projected on the earth surface equals the heading of the object 5. In other embodiments the baseline may be aligned at an angle with respect the moving direction 12. Since the spatial interrelation between the attitude of the baseline and the moving direction 12 is fixed, the heading of the object 5 can easily be determined, once the heading of the baseline 7 is known.

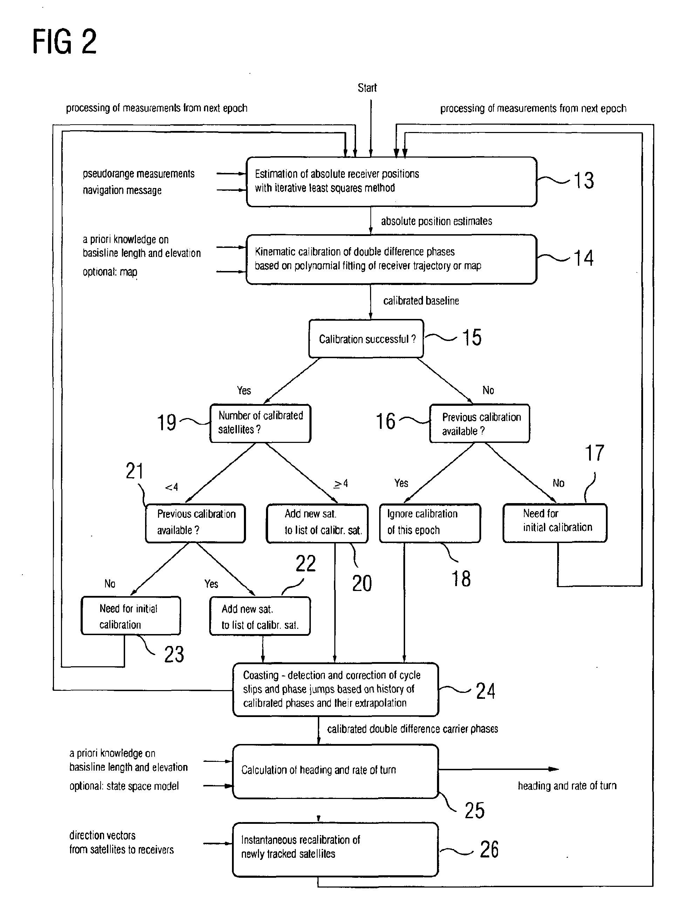

The heading determination according to the method decribed herein is performed in several steps as shown in Figure 2. In a first step, a conventional absolute position estimation 13 is performed with the iterative least-squares method using pseudorange measurements. In a second step, the estimation 13 is followed by a calibration 14 of double differences of the carrier phase measurements. By the calibration a phase corrector for each double difference phase measurement is determined. The phase corrector can used for calculating calibrated double difference phase measurements.

In a subsequent monitoring step 15, the result of the calibration 14 is evaluated. If the calibration 14 was unsuccessful, a check 16 for a previous successful calibration 14 is performed. If there is no previous successful calibration 14, a triggering 17 of an initial calibration 14 occurs. If there is a valid result of a previous calibration 14 available, a replacement step 18 will look up the result of th previous calibration 14.

If the monitoring step 15 shows that the calibration 14 was successful, a check 19 is performed for determining, whether the number of satellites 2, whose carrier signals 3 can be used for a calibrated double difference phase measurement, is smaller than four or whether the number equals four or is bigger than four. In the latter case, the newly calibrated satellite 2 is added to the list of calibrated satellites 2 by an update 20 and the current result of the calibration 14 is used in subsequent steps. If, however, the number of satellites 2 is smaller than four, a check 21 is performed, whether the missing number of phase correctors is available from a previous calibration 14. If the missing number of phase correctors is available from a previous calibration 14, the current calibration 14 is supplemented by phase correctors from a previous calibration 14 by an update 22, by which the newly calibrated satellites 2 are added to the list of previously calibrated satellites 2, and the navigation signals from the satellites 2 contained in the list of calibrated satellites 2 are used for calculating calibrated double difference phase measurement. If the missing number of phase correctors is not available a triggering 23 of an initial calibration 14 occurs.

Once a sufficiently large number of calibrated double difference phase measurements can be calculating, a so called phase coasting 24 is performed. During coasting 24, the uncalibrated or calibrated double difference measurement are tracked, and cycle slips and other phase jumps are detected and, if feasible, corrected based on the history of the calibrated phases and their extrapolation. In a next step, an iterative calculation 25 of the heading and rate of turn is performed based on the calibrated double difference carrier phases, and the a priori known baseline length and elevation. The calculation 25 can be optionally augmented by a state space model that includes the heading and its rate as states and exploits the inertia of the moving vehicle 5. Finally, an instantaneous re-calibration 26 of newly tracked satellites is performed at the end of each epoch.

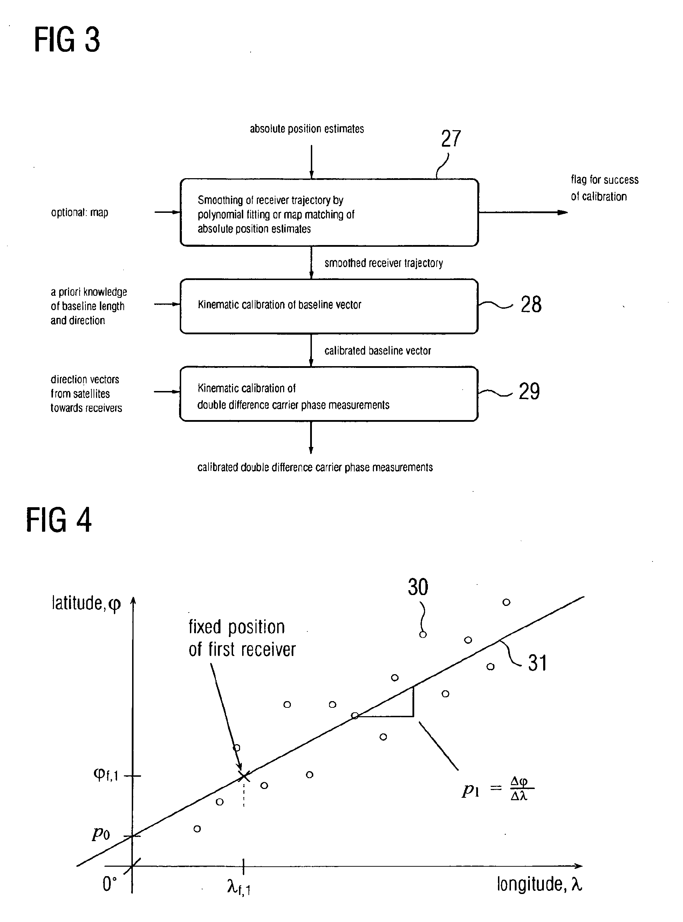

Figure 3 shows more details of the calibration 14 of the double difference phase measurements. The calibration 14 starts with a asmoothing 27 of a receiver trajectory either by a polynomial fitting or by a map matching of the absolute position estimates. In a second step, a baseline calibration 28 is performed, in which the baseline vector between both receivers 6 is calibrated based on the smoothed receiver trajectory and the a priori known baseline length and elevation. In the third step, a kinematic calibration 29 of the double difference carrier phases is executed. The kinematic calibration 29 is based on the smoothed receiver trajectory and the direction vectors pointing from the satellites 2 to the receivers 6.

The method is described in detail in the following section. Before the method will be described in more detail, the problems associated with the determination of the heading shall be contemplated.

**1. Problems in Connection with Heading Determination**

For precise relative positioning, one commonly uses double difference carrier phase measurements as they eliminate both receiver and satellite clock offsets and atmospheric delays for short baseline lengths. These double difference (DD) carrier phase measurements are modeled by Teunissen [2] [3] in matrix-vector notation (i.e. the double difference measurement for satellite $k \in \{1,..., K\}$ and baseline $r = \{1,..., R\}$ is set into position $(k, r)$) for epoch $n$ as

$$\mathbf{z}_n = \mathbf{H}_n \boldsymbol{\xi}_n + \mathbf{A}\mathbf{N} + \boldsymbol{\varepsilon}_n = \mathbf{H}_n \mathbf{R}_n \boldsymbol{\xi}'_n + \mathbf{A}\mathbf{N} + \boldsymbol{\varepsilon}_n, \qquad (1)$$

where $\mathbf{H}_n$ is the differential geometry matrix, $\mathbf{R}_n \in \mathbb{R}^{3 \times p}$ is the unknown rotation matrix describing the attitude, $\boldsymbol{\xi}'_n \in \mathbb{R}^{p \times R}$ are the known baseline vectors in a local coordinate frame, $\mathbf{A}$ is a pre-factor matrix for mapping the double difference ambiguities $\mathbf{N}$ into measurement domain, $\varepsilon_n$ describes the phase noise and

$$p = \begin{cases} R & if & R \leq 3 \\ 3 & else. \end{cases} \qquad (2)$$

The matrix equation (1) can be transformed into a vector equation with the help of the *vec* operator, i.e.

$$\underbrace{vec(\mathbf{z}_n)}_{\mathbf{z}'_n} = \underbrace{[\mathbf{I}_R \otimes \mathbf{A}]}_{\mathbf{A}'} vec(\mathbf{N}) + \underbrace{[(\boldsymbol{\xi}')^T \otimes \mathbf{H}_n]}_{\mathbf{H}'_n} vec(\mathbf{R}_n) + \underbrace{vec(\boldsymbol{\varepsilon}_n)}_{\boldsymbol{\varepsilon}'_n}, \qquad (3)$$

where $\mathbf{I}_R$ is the quadratic identity matrix with $R$ rows and columns. The application of the vector-operator is advantageous as it brings all unknown quantities to the last factor in each product. The integer ambiguities $\mathbf{N}$ and the orthonormal rotation matrix $\mathbf{R}_n$ shall be determined such that the squared noise is minimized, i.e.

$$\min_{\mathbf{N}' \in \mathbb{Z}^{K \times I}, \mathbf{R}_n \in \mathbb{R}^{3 \times 3}} \| \mathbf{z}'_n - \mathbf{A}' vec(\mathbf{N}) - \mathbf{H}'_n vec(\mathbf{R}_n) \|^2 \quad s.t. \quad \mathbf{R}_n \in \mathbb{O}^{3 \times 3}, \qquad (4)$$

which is a constrained integer least-squares problem. These problems are typically solved in four steps: First, an unconstrained least-squares float solution is computed by ignoring the integer and orthonormality properties, i.e.

$$\begin{bmatrix} vec(\hat{\mathbf{N}}) \\ vec(\hat{\mathbf{R}}_n) \end{bmatrix} = \left( \begin{bmatrix} \mathbf{A}' \\ \mathbf{H}'_n \end{bmatrix}^T \mathbf{\Sigma}_{\mathbf{z}_n}^{-1} \begin{bmatrix} \mathbf{A}' \\ \mathbf{H}'_n \end{bmatrix} \right)^{-1} \begin{bmatrix} \mathbf{A}' \\ \mathbf{H}'_n \end{bmatrix}^T \mathbf{\Sigma}_{\mathbf{z}_n}^{-1} \mathbf{z}_n, \qquad (5)$$

with $\Sigma_{z_n}$ being the covariance matrix of the double difference phase measurements.

Secondly, a search is performed to find a set of integer candidate vectors. As the ambiguities of the float solution $\hat{\mathbf{N}}'$ are heavily correlated, Teunissen proposed an integer decorrelation in [4] to decorrelate the search space, and then to perform the integer fixing in the decorrelated search space. Once a set of integer candidates is found, conditional baseline estimates are determined for each integer candidate by

$$\check{\mathbf{R}}_n = \operatorname{argmin}_{\mathbf{R}_n \in \mathbb{O}^{3 \times p}} \| vec(\hat{\mathbf{R}}_n - \mathbf{R}_n) \|^2_{\mathbf{\Sigma}^{-1}_{vec(\hat{\mathbf{R}}_n)}}, \qquad (6)$$

with

$$\mathbf{\Sigma}_{vec(\hat{\mathbf{R}}_n)} = \left( \begin{bmatrix} \mathbf{A}' \\ \mathbf{H}'_n \end{bmatrix}^T \mathbf{\Sigma}_{\mathbf{z}_n}^{-1} \begin{bmatrix} \mathbf{A}' \\ \mathbf{H}'_n \end{bmatrix} \right)^{-1}. \qquad (7)$$

Teunissen solved the constrained least-squares optimization of (6) in [3] by a Lagrange optimization as

$$\check{\mathbf{R}}_n = \arg\min_{\mathbf{R}_n} \left( \| vec(\hat{\mathbf{R}}_n - \mathbf{R}_n) \|^2_{\mathbf{\Sigma}^{-1}_{vec(\hat{\mathbf{R}}_n)}} + tr\left( \mathbf{\Lambda}(\mathbf{R}_n^T \mathbf{R}_n - \mathbf{1}_3) \right) \right) \qquad (8)$$

with

$$\mathbf{\Lambda} = \begin{bmatrix} \lambda_1 & \dfrac{1}{2}\lambda_4 & \dfrac{1}{2}\lambda_5 \\ \dfrac{1}{2}\lambda_4 & \lambda_2 & \dfrac{1}{2}\lambda_6 \\ \dfrac{1}{2}\lambda_5 & \dfrac{1}{2}\lambda_6 & \lambda_3 \end{bmatrix}. \qquad (9)$$

Finally, Teunissen plugged the obtained integer candidates $\breve{\mathbf{N}}$ and rotation matrices $\breve{\mathbf{R}}_n$ into (4), and selected the estimates of minimum error norm.

The method according to Teunissen [2][3] need to resolve the carrier phase integer ambiguities, which can only be performed with expensive geodetic receivers. Only these receivers track the phases continuously such that the integer ambiguities can be resolved. Low cost navigation chips and antennas as used in smartphones and automobile navigation devices do not provide cannot track the phase reliably, which prevents the application of the constrained integer least-squares algorithm of Teunissen [2][3].

In contrast to the prior art method of Teunissen, the method depicted in Figures 2 and 3 can be used for the estimation of the heading of a moving object using low cost satellite navigation chips and antennas.

In the following various aspects of the method depicted in Figures 2 and 3 will be described in more detail.

## 2. Method for Kinematic On-Board Phase Calibration

In this section details of the calibration 14 from Figure 2 and 3 are described.

### 2.1 Estimation of Receiver Trajectory with Code Measurements

The single-frequency pseudorange measurements of satellite $k \in \{1,...,K\}$ at time $t$ are commonly modeled as

$$\rho^k(t) = \left( \vec{e}^{\,k}(t) \right)^T \left( \vec{x}(t) - \vec{x}^k(t-\tau) \right) + c\left( \delta\tau(t) - \delta\tau^k(t-\tau) \right) + \eta^k(t), \qquad (10)$$

with the unit vector $\vec{e}^{\,k}(t)$ pointing from satellite k to the receiver 6, the receiver position $\vec{x}(t)$, the satellite position $\vec{x}^k(t\text{-}\tau)$ at the time of transmission, the receiver clock offset $c\delta\tau(t)$, the satellite clock offset $c\delta\tau^k(t\text{-}\tau)$ at the time of transmission and the measurement noise $\eta^k(t)$. Bringing all known quantities to the left side of the equation and writing it in matrix-vector-notation yields

$$\tilde{\boldsymbol{\rho}}(t) = \begin{bmatrix} \tilde{\rho}^1(t) \\ \tilde{\rho}^2(t) \\ \vdots \\ \tilde{\rho}^K(t) \end{bmatrix} = \begin{bmatrix} \rho^1(t) + (\vec{e}^{\,1}(t))^T \vec{x}^1(t-\tau) + c\delta\tau^1(t-\tau) \\ \rho^2(t) + (\vec{e}^{\,2}(t))^T \vec{x}^2(t-\tau) + c\delta\tau^2(t-\tau) \\ \vdots \\ \rho^K(t) + (\vec{e}^{\,K}(t))^T \vec{x}^K(t-\tau) + c\delta\tau^K(t-\tau) \end{bmatrix}$$

$$= \underbrace{\begin{bmatrix} (\vec{e}^{\,1}(t))^T & 1 \\ (\vec{e}^{\,2}(t))^T & 1 \\ \vdots & \vdots \\ (\vec{e}^{\,K}(t))^T & 1 \end{bmatrix}}_{\mathbf{H}(t)} \underbrace{\begin{bmatrix} \vec{x}(t) \\ c\delta\tau(t) \end{bmatrix}}_{\xi(t)} + \underbrace{\begin{bmatrix} \eta^1(t) \\ \eta^2(t) \\ \vdots \\ \eta^K(t) \end{bmatrix}}_{\eta(t)}. \qquad (11)$$

The receiver position and clock offset are determined by a least-squares estimation as

$$\hat{\xi}(t) = \begin{bmatrix} \hat{\vec{x}}(t) \\ c\delta\hat{\tau}(t) \end{bmatrix} = \left( \mathbf{H}^T(t)\mathbf{H}(t) \right)^{-1} \mathbf{H}^T(t)\tilde{\boldsymbol{\rho}}(t). \qquad (12)$$

**2.2 Smoothing of Receiver Trajectory**

Pseudorange measurements from low cost antennas substantially suffer from multipath, which can lead to position errors of more than 10 m and prevent any useful heading determination. However, various approaches can be used for the smoothing 27 from Figure 3 and for improving the heading accuracy thereby.

**2.2.1 Polynomial Fitting of Geodetic Latitude and Longitude**

One option for smoothing the multipath and code noise is to make a polynomial fitting of the receiver positions. This will be especially beneficial if the receiver trajectory is describable by a polynomial. As shown in Figure 4, the pseudorange based position estimates 30 vary are affected by multipath, but the position estimates 30 can be interpolated by a straight line 31.

This is typically fulfilled if the receiver 6 is moving sufficiently fast. The polynomial fitting can be in general applied to the position coordinates in any coordinate system. However, a geodetic coordinate system is favorable for two reasons: First, it enables a separation of the more precise horizontal components from the less precise height estimate and, secondly, the parametrization in terms of latitude and longitude enables a two-dimensional consideration for a movement on a contour line independent of the bending of the earth. The latter aspect is only relevant for a path length of at least 500 m.

The geodetic coordinates are obtained from the ECEF coordinates $\bar{\hat{x}}(t) = [\hat{x}_{ECEF}(t), \hat{y}_{ECEF}(t), \hat{z}_{ECEF}(t)]^T$ by the transformation

$$Longitude : \lambda(t) = \arctan\left(\frac{\hat{y}_{ECEF}(t)}{\hat{x}_{ECEF}(t)}\right)$$

$$Latitude : \varphi(t) = \arctan\left(\frac{\hat{z}_{ECEF}(t)}{\sqrt{\hat{x}_{ECEF}^2(t) + \hat{y}_{ECEF}^2(t)}}\left(1 - \frac{f(2-f)N_\varphi}{N_\varphi + h(t)}\right)^{-1}\right)$$

$$Height : h(t) = \frac{\sqrt{\hat{x}_{ECEF}^2(t) + \hat{y}_{ECEF}^2(t)}}{\cos(\varphi(t))} - N_\varphi, \tag{13}$$

which is initialized by a certain $h(t)$ (e.g. 0) and then iterated a few times. In (13), $N_\varphi$ is called the radius of curvature in the direction perpendicular to the meridian, and is given by

$$N_\varphi = \frac{a}{\sqrt{1 - f(2-f)\sin^2(\varphi(t))}} \tag{14}$$

and the flattening of the earth is given by

$$f = \frac{a-b}{a} = \frac{1}{298.257223563}, \tag{15}$$

and $\{a, b\}$ denote the semi-major and semi-minor axis of the earth. Their values are given by

$$a = 6378.137\,km \quad \text{and} \quad b = 6356.752\,km. \qquad (16)$$

Once the position coordinates are transformed into geodetic coordinates, the relationship between the estimated latitudes and longitudes is tried to be approximated by a polynomial of order $l$, i.e.

$$p(\lambda) = p_0 + p_1\lambda + \ldots + p_l\lambda^l, \qquad (17)$$

which leads to the following model for the latitudes:

$$\underbrace{\begin{bmatrix} \varphi(t_1) \\ \varphi(t_2) \\ \vdots \\ \varphi(t_N) \end{bmatrix}}_{\varphi} = \underbrace{\begin{bmatrix} 1 & \lambda(t_1) & \lambda^2(t_1) & \ldots & \lambda^l(t_1) \\ 1 & \lambda(t_2) & \lambda^2(t_2) & \ldots & \lambda^l(t_2) \\ \vdots & & & & \vdots \\ 1 & \lambda(t_N) & \lambda^2(t_N) & \ldots & \lambda^l(t_N) \end{bmatrix}}_{\mathbf{V}} \underbrace{\begin{bmatrix} p_0 \\ p_1 \\ \vdots \\ p_l \end{bmatrix}}_{\mathbf{p}} + \underbrace{\begin{bmatrix} \varepsilon(t_1) \\ \varepsilon(t_2) \\ \vdots \\ \varepsilon(t_N) \end{bmatrix}}_{\varepsilon} \qquad (18)$$

The least-squares estimates of the polynomial coefficients are given by

$$\hat{\mathbf{p}} = \left(\mathbf{V}^T\mathbf{V}\right)^{-1}\mathbf{V}^T\varphi. \qquad (19)$$

### 2.2.2 Polynomial Fitting of Local Coordinates

The calibration of the baseline in geodetic coordinates has one disadvantage: The found polynomial refers to a different coordinate system than the a priori knowledge (baseline length and pitch angle). This requires a coordinate transformation and an iterative solution as both information cannot be combined in closed form.

An alternative approach to the fitting of geodetic coordinates would be a fitting of local coordinates. These local coordinates (East, North and Up-components) are obtained from the ECEF coordinates by the transformation

$$\Delta\hat{\bar{x}}_{ENU}(t_i) = \begin{bmatrix} \Delta\hat{x}_E(t_i) \\ \Delta\hat{x}_N(t_i) \\ \Delta\hat{x}_U(t_i) \end{bmatrix}$$

$$= \begin{bmatrix} -\sin(\lambda(t_i)) & \cos(\lambda(t_i)) & 0 \\ -\cos(\varphi(t_i))\cos(\lambda(t_i)) & -\sin(\varphi(t_i))\sin(\lambda(t_i)) & \cos(\varphi(t_i)) \\ \cos(\varphi(t_i))\cos(\lambda(t_i)) & \sin(\varphi(t_i))\sin(\lambda(t_i)) & \sin(\varphi(t_i)) \end{bmatrix}\left(\hat{\bar{x}}(t_{i+1}) - \hat{\bar{x}}(t_i)\right). \qquad (20)$$

The north-component is then fitted by the polynomial

$$p(\Delta\hat{x}_E) = p_0 + p_1\Delta\hat{x}_E + \ldots + p_l\Delta\hat{x}_E^l, \qquad (21)$$

such that we can model the north component for a certain series as

$$
\begin{bmatrix} \Delta \hat{x}_N(t_1) \\ \Delta \hat{x}_N(t_2) \\ \vdots \\ \Delta \hat{x}_N(t_N) \end{bmatrix} = \begin{bmatrix} 1 & \Delta \hat{x}_E(t_1) & \Delta \hat{x}_E^2(t_1) & \dots & \Delta \hat{x}_E^l(t_1) \\ 1 & \Delta \hat{x}_E(t_2) & \Delta \hat{x}_E^2(t_2) & \dots & \Delta \hat{x}_E^l(t_2) \\ \vdots & & & & \vdots \\ 1 & \Delta \hat{x}_E(t_N) & \Delta \hat{x}_E^2(t_N) & \dots & \Delta \hat{x}_E^l(t_N) \end{bmatrix} \begin{bmatrix} p_0 \\ p_1 \\ \vdots \\ p_l \end{bmatrix} + \begin{bmatrix} \varepsilon(t_1) \\ \varepsilon(t_2) \\ \vdots \\ \varepsilon(t_N) \end{bmatrix}. \qquad (22)
$$

$$\underbrace{\phantom{xxxx}}_{\Delta\hat{x}_N} \quad \underbrace{\phantom{xxxxxxxxxxxxxxxxxxxxxxx}}_{\mathbf{V}} \quad \underbrace{\phantom{x}}_{\mathbf{p}} \quad \underbrace{\phantom{xx}}_{\varepsilon}$$

The polynomial is then obtained again by a least-squares estimation as

$$
\hat{\mathbf{p}} = \left( \mathbf{V}^T \mathbf{V} \right)^{-1} \mathbf{V}^T \Delta \hat{x}_N. \qquad (23)
$$

Note that the polynomial fitting of the North component as a function of the East component is beneficial if $\Delta \hat{x}_E(t_i) \geq \Delta \hat{x}_E(t_i)$, while in the complementary case one would better try to find a polynomial for the East component as a function of the North component.

### 2.2.3 Map Matching

The multipath and noise can be reduced to an even larger extend if a certain map is a priori available. In this case, the absolute position has to be found only along a given track, which means that the curve fitting reduces to the following one-dimensional least-squares problem:

$$
\min_s \| \hat{\vec{x}}_{ENU}(t_i) - \vec{x}_{MAP}(s) \|^2, \qquad (24)
$$

where s describes the length of the path from a certain reference point to the current position. The direction of the movement of is then found from the baseline

$$
\hat{b}(t_i) = \vec{x}_{MAP}(s(t_{i+1})) - \vec{x}_{MAP}(s(t_i)). \qquad (25)
$$

### 2.3 Calibration of Baseline

The previously described smoothing 27 of the receiver trajectory by a polynomial shall now be combined with the a priori knowledge on the baseline length and pitch angle for the kinematic calibration 28 of the baseline.

Let us first consider the polynomial fitting of geodetic coordinates. In this case, we fix the position of one receiver 6 to a point $\{\lambda_{f,1}, \varphi_{f,1} = p_0 + p_1\lambda_{f,1}\}$ on the polynomial as shown in Figure 4, and search for the coordinates $\{\lambda_{f,2} = \lambda_{f,1} + \Delta\lambda, \varphi_{f,2} = p_0 + p_1\lambda_{f,2}\}$ of the second receiver 6 on the polynomial under the constraint of a given baseline length $\overline{l}$. This is equivalent to solving the equation

$$
f(\Delta\lambda) = \| \hat{\vec{x}}_1 - \hat{\vec{x}}_2 \left( \lambda_{f,2}, \varphi_{f,2}, h_2 \right) \|^2 - \overline{l}^2
$$

$$
= \| \hat{\vec{x}}_1 - \hat{\vec{x}}_2 \left( \lambda_{f,1} + \Delta\lambda, p_0 + p_1(\lambda_{f,1} + \Delta\lambda), h_2 \right) \|^2 - \overline{l}^2 \overset{!}{=} 0, \qquad (26)
$$

for $\Delta\lambda$, using the well-known transformation of geodetic coordinates into ECEF coordinates:

$$\hat{\vec{x}}_r(\lambda_r,\varphi_r,h_r) = \begin{bmatrix} \hat{x}_{ECEF,r} \\ \hat{y}_{ECEF,r} \\ \hat{z}_{ECEF,r} \end{bmatrix} = \begin{bmatrix} \left(N_{\varphi_r}+h_r\right)\cos(\varphi_r)\cos(\lambda_r) \\ \left(N_{\varphi_r}+h_r\right)\cos(\varphi_r)\sin(\lambda_r) \\ \left(N_{\varphi_r}\left(1-e^2\right)+h_r\right)\sin(\varphi_r) \end{bmatrix}, \qquad (27)$$

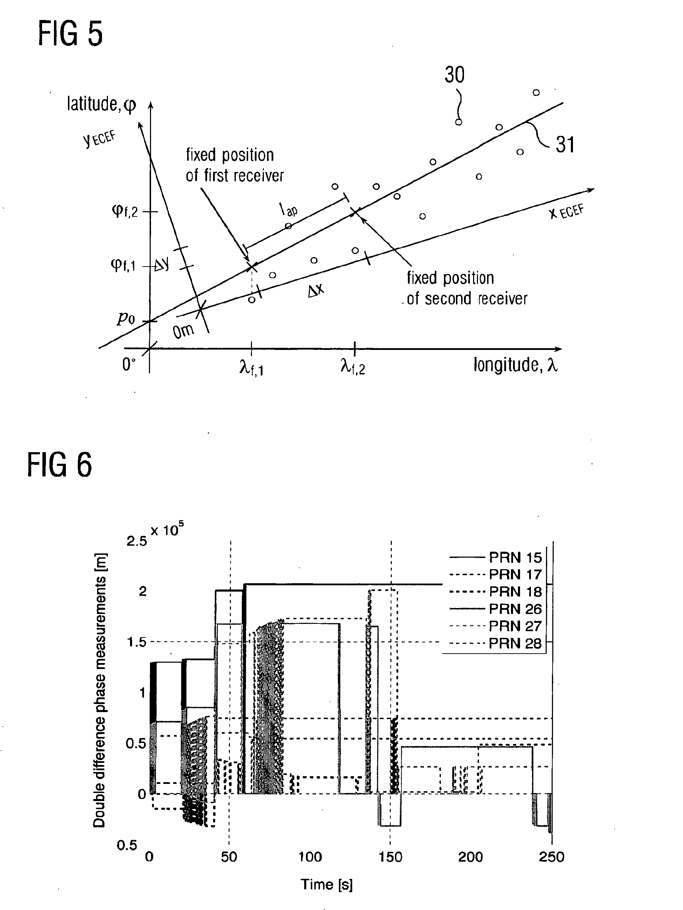

with e being the eccentricity of the earth. The root finding problem of (26) is also indicated in Figure 5. The position of one receiver 6 is fixed on the polynomial, and the position of the second receiver 6 is chosen such that it fulfills the baseline length requirement in the Cartesian (ECEF) coordinate system and also lies on the polynomial defined in the geodetic coordinate system.

Replacing $\hat{x}_r(\lambda_r,\varphi_r,h_r), r\in\{1,2\}$, in (17) by (18) yields

$$f(\Delta\lambda) = \left(\hat{x}_{ECEF,1} - \left(N_{\varphi_f,2}+h_2\right)\cos\left(p_0 + p_1\left(\lambda_{f,1}+\Delta\lambda\right)\right)\cos\left(\lambda_{f,1}+\Delta\lambda\right)\right)^2$$

$$+ \left(\hat{y}_{ECEF,1} - \left(N_{\varphi_f,2}+h_2\right)\cos\left(p_0 + p_1\left(\lambda_{f,1}+\Delta\lambda\right)\right)\sin\left(\lambda_{f,1}+\Delta\lambda\right)\right)^2$$

$$+ \left(\hat{z}_{ECEF,1} - \left(N_{\varphi_f,2}\left(1-e^2\right)+h_2\right)\sin\left(p_0 + p_1\left(\lambda_{f,1}+\Delta\lambda\right)\right)\right)^2 - \bar{l}^2 = 0, \qquad (28)$$

where $\Delta\lambda$ is the only unknown variable. As equation (28) can not be solved in closed form for $\Delta\lambda$, the roots of $f(\Delta\lambda)$ are computed iteratively with the Gauss-Newton method:

$$\Delta\lambda_{n+1} = \Delta\lambda_n - \left.\frac{f(\Delta\lambda)}{f'(\Delta\lambda)}\right|_{\Delta\lambda=\Delta\lambda_n}, \qquad (29)$$

where the derivative $f'(\Delta\lambda)$ can be derived from equation (28) in closed form. Once $\Delta\lambda$ is known, the baseline vector can be calibrated with equation (27) to

$$\hat{b} = \hat{x}_1(\lambda_{f,1},\varphi_{f,1},h_1) - \hat{x}_2(\lambda_{f,1}+\Delta\lambda, p_0 + p_1(\lambda_{f,1}+\Delta\lambda),h_2), \qquad (30)$$

which lies on the polynomial and simultaneously fulfills the a priori length constraint.

Let us now consider the baseline calibration for the two other cases - the polynomial fitting of local coordinates and the map matching. As the polynomial and the a priori knowledge are given in the same coordinate systems, the baseline calibration reduces to a simple normalization. Thus, the calibrated baseline becomes

$$\hat{b}(t_i) = \frac{\bar{l}}{\sqrt{(\Delta\hat{x}_E(t_{i+1})-\Delta\hat{x}_E(t_i))^2 + (p(\Delta\hat{x}_E(t_{i+1}))-p(\Delta\hat{x}_E(t_i)))^2}} \cdot \begin{bmatrix} \Delta\hat{x}_E(t_{i+1})-\Delta\hat{x}_E(t_i) \\ p(\Delta\hat{x}_E(t_{i+1}))-p(\Delta\hat{x}_E(t_i)) \end{bmatrix}$$

$$(31)$$

For map matching, it similarly follows as

$$\hat{b}(t_i) = \overline{I} \cdot \frac{\vec{x}_{MAP}(s(t_{i+1})) - \vec{x}_{MAP}(s(t_i))}{\| \vec{x}_{MAP}(s(t_{i+1})) - \vec{x}_{MAP}(s(t_i)) \|}. \tag{32}$$

**2.4 Calibration of Double Difference Phase Measurements**

After the baseline 7 has been calibrated, the kinematic calibration 29 of the double difference phase measurement is performed by using a phase corrector.

The double difference (DD) carrier phase measurement at time $t_i$ is calibrated to

$$\Delta\varphi_{cal}^{kl}(t_i) = (\Delta\vec{e}^{\,kl}(t_i))^T \hat{b}(t_i). \tag{33}$$

The phase corrector $\Delta\varphi_{corr}^{kl}$ is determined by averaging the difference of the measured and calibrated double difference phases over $N_{cal}$ epochs, i.e.

$$\Delta\varphi_{corr}^{kl} = \frac{1}{N_{cal}} \cdot \sum_{i=1}^{N_{cal}} \left( \Delta\varphi^{kl}(t_i) - \Delta\varphi_{cal,12}^{kl}(t_i) \right), \tag{34}$$

which requires a continuous tracking for $N_{cal}$ epochs. The phase corrector $\Delta\varphi_{corr}^{kl}$ is then subtracted from the measurements of all upcoming measurements, i.e. the measurements are calibrated to

$$\Delta\varphi_{cal}^{kl}(t_i) = \Delta\varphi^{kl}(t_i) - \Delta\varphi_{corr}^{kl} \quad \forall i > N_{cal}. \tag{35}$$

**3. Heading Estimation with Coasting**

Once the carrier phases are calibrated by calibration 14, the heading can be precisely tracked based on the change of the carrier phase over time but without the need of integer ambiguity resolution. However, (half and full) cycle slips as well as any other phase jumps and outliers have to be detected carefully and the respective phases must either be re-calibrated or excluded from the heading determination. This is particular relevant for low cost receivers, which can not track the carrier phase reliably and suffer from frequent phase jumps and outliers as shown in Figure 6, where the double difference phases show sudden phase jumps during a trip. Therefore the phase coasting 24 from Figure 2 is performed after the phase correctors $\Delta\varphi_{corr}^{kl}$ have been determined for a sufficiently large number of satellites 2.

**3.1 Cycle Slip Detection and Correction**

Multipath and shadowing might reduce the signal power, which leads to phase jumps of an integer multiple of $\lambda / 2$. These cycle slips shall be detected on a single satellite basis by computing the difference between the measured double difference phase at epoch $t_i$ and the extrapolated double difference phase at epoch $t_i$, i.e.

$$\delta\varphi^{kl}(t_i) = \Delta\varphi^{kl}(t_i) - \Delta\varphi_{pred}^{kl}(t_i)$$

$$= \Delta\varphi^{kl}(t_i) - \left( \Delta\varphi^{kl}(t_{i-2}) + 2(t_{i-1} - t_{i-2}) \cdot \frac{\Delta\varphi^{kl}(t_{i-1}) - \Delta\varphi^{kl}(t_{i-2})}{t_{i-1} - t_{i-2}} \right), \qquad (36)$$

where the extrapolation is based here on the measurements of the last two epochs but could also take a larger history into account. Dividing the phase offset of equation (36) by $\lambda / 2$ and rounding to the nearest integer number yields

$$\check{N}^{kl}(t_i) = \left[ \frac{\delta\varphi^{kl}(t_i)}{\lambda / 2} \right]. \qquad (37)$$

A cycle slip is detected if this number differs from zero and if two further constraints are fulfilled: First, the remaining real-valued offset has to be below a certain threshold (e.g. 1.5 cm) to support the integer nature of cycle slips, i.e.

$$| \delta\varphi^{kl}(t_i) - \frac{\lambda}{2} \check{N}^{kl} | < \Delta\varphi_{th}, \qquad (38)$$

and, secondly, the receiver velocity has to be above a certain minimum value $v_{th}$ as for low velocities the receiver might suddenly change its direction of movement and, thereby, causes naturally much larger gradients in the double difference phase.

Once a cycle slip is detected, it can be easily removed from the measurements by

$$\Delta\varphi_{corr}^{kl}(t_i) = \Delta\varphi^{kl}(t_i) - \frac{\lambda}{2} \check{N}^{kl}(t_i). \qquad (39)$$

### 3.2 Detection of Other Phase Jumps and Correction Based on Extrapolated Phases

If the criterion (38) is not fulfilled, then the phase jump can not be considered as a cycle slip. However, it might still be corrected based on the history of the phase as long as a continuous tracking was available over at least $N_{ep,min}$ epochs. In this case, a polynomial of order $l$ is fitted into the last $N_{ep,min}$ phases, i.e.

$$\min_{p_0,\dots,p_l} \sum_{j=1}^{N_{ep,min}} \left( \Delta\varphi^{kl}(t_{i-j}) - (p_0 + p_1 t_{i-j} + \dots + p_l t_{i-j}^l) \right)^2 \qquad (40)$$

and then used to extrapolate the phase to the "jumping" epoch, i.e.

$$\Delta\varphi_{cal}^{kl}(t_i) = p_0 + p_1 t_i + \dots + p_l t_i. \qquad (41)$$

Note that this single satellite based correction of phase jumps can again only be performed if the receiver 6 is moving sufficiently fast as for low velocities the receiver 6 might suddenly change its moving direction 12 and, thereby, naturally cause a large gradient in the double difference phase.

If the phase jump is finally beyond a predefined expectation level, so that a correction seems to erroneous, a recalibration of the baseline 7 and the double difference phase measurements can be triggered.

**4. One-Dimensional Iterative Heading Determination**

Based on the calibrated double difference phase measurements obtained from coasting 24, the calculation 25 of the heading can be performed.

The calibrated double difference phase measurements can be written in matrix-vector notation as

$$\Delta\varphi_{cal} = \underbrace{\begin{bmatrix} (\vec{e}^{\,12})^T \\ \vdots \\ (\vec{e}^{\,1K})^T \end{bmatrix}}_{\mathbf{H}} \cdot \mathbf{R}_{\substack{ENU\\ECEF}} \cdot \begin{bmatrix} l\cos(\nu_1)\cos(\nu_2) \\ l\cos(\nu_1)\sin(\nu_2) \\ l\sin(\nu_1) \end{bmatrix} + \boldsymbol{\eta}, \qquad (42)$$

where $\mathbf{H}$ includes the single difference unit vectors pointing from the satellites 2 to the receiver 6 in ECEF coordinates, $\mathbf{R}_{\substack{ENU\\ECEF}}$ describes the transformation of local into ECEF coordinates, $l$ is the baseline length, $\nu_1$ is the pitch angle/elevation and $\nu_2$ denotes the heading, and $\eta$ is a noise term.

Assuming that the baseline length is a priori known (i.e. $l = \bar{l}$) and that the pitch angle is $\nu_1 = 0°$ (which is in general valid for maritime and automotive applications), (42) can be further developed to

$$\Delta\varphi_{cal} = \tilde{\mathbf{H}} \begin{bmatrix} \bar{l}\cos(\nu_2) \\ \bar{l}\sin(\nu_2) \\ 0 \end{bmatrix} + \boldsymbol{\eta}, \qquad (43)$$

with $\tilde{\mathbf{H}}$ being implicitly defined by (42) and (43). As the estimation of $\nu_2$ is a non-linear problem, the trigonometric functions are linearized around an initial value $\nu_{2,0}$ i.e.

$$\cos(\nu_2) \approx \cos(\nu_{2,0}) - \sin(\nu_{2,0}) \cdot (\nu_2 - \nu_{2,0})$$
$$\sin(\nu_2) \approx \sin(\nu_{2,0}) + \cos(\nu_{2,0}) \cdot (\nu_2 - \nu_{2,0}) \qquad (44)$$

to transform (43) into a measurement that depends linearly on the heading $\nu_2$ :

$$\Delta\tilde{\varphi}_{cal} = \Delta\varphi_{cal} - \tilde{\mathbf{H}} \begin{bmatrix} \bar{l}\cos(\nu_{2,0}) + \bar{l}\sin(\nu_{2,0}) \cdot \nu_{2,0} \\ \bar{l}\sin(\nu_{2,0}) - \bar{l}\cos(\nu_{2,0}) \cdot \nu_{2,0} \\ 0 \end{bmatrix} = \tilde{\mathbf{H}} \cdot \bar{l} \begin{bmatrix} -\sin(\nu_{2,0}) \\ \cos(\nu_{2,0}) \\ 0 \end{bmatrix} \cdot \nu_2 + \boldsymbol{\eta} = \tilde{\mathbf{h}} \cdot \nu_2 + \boldsymbol{\eta}.$$

$$(45)$$

The least-squares estimation of $\nu_2$ then easily follows as

$$\hat{\nu}_2 = \left( \tilde{\mathbf{h}}^T \tilde{\mathbf{h}} \right)^{-1} \tilde{\mathbf{h}}^T \Delta\tilde{\varphi}_{cal}. \qquad (46)$$

This estimate is then used to make a new linearization of $v_2$ around $\hat{v}_2$' and then to recompute $\Delta\tilde{\varphi}_{cal}$ and $\hat{v}_2$. Further iterations might be made although simulations have shown that a sufficient convergence is achieved within two iterations. The initial value $v_{2,0}$ at epoch $t_i$ is typically chosen as the converged value $\hat{v}_2(t_{i-1})$ of the previous epoch.

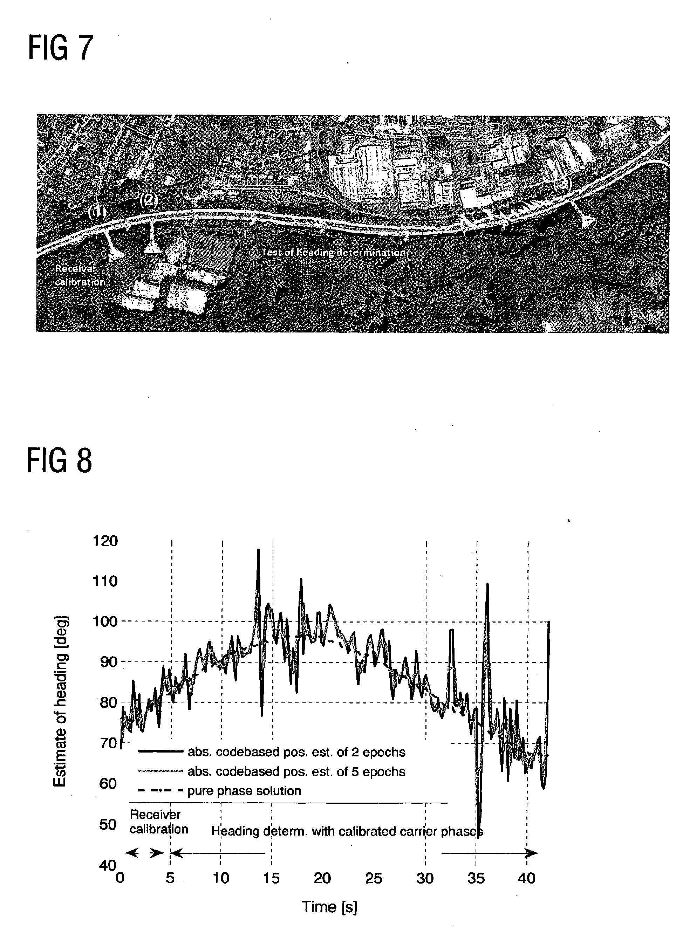

This heading estimation was tested with two low cost u-blox LET 6T receivers, which were mounted on the roof of a car. Both receivers 6 were aligned with the direction of movement, and the distance between both receivers 6 was 1.078 m. Figure 7 shows the route of the car, which starts with a straight highway section used for calibrating the phases of all satellites 2 , and a subsequent slightly curved highway section, during which the heading was derived solely from the coasted carrier phases.

The heading estimation was performed on highway A6 near St. Ingbert (Germany): The absolute position estimates suffered from the code multipath, which leads to sudden jumps of up to 10 m in the receiver trajectory, which can be recognized from the upper trajectory The kinematic calibration of the double difference carrier phases was performed between points (1) and (2) at a speed of approximately 100 km/h. The calibrated carrier phases were then coasted over 40 s corresponding to a distance of ~ 1 km up to point (3). The coasting of carrier phases in the lower trajectory results in a significantly less noisy heading information compared to the heading information derived from a sequence of absolute code-based position solutions.

Figure 8 shows the obtained heading estimates for the pre-described method in comparison to the heading estimates that one would obtain from the code/ pseudorange-based position estimates. The heading was referred to the North direction and counted clockwise, i.e. the initial value of the heading is 70° , which corresponds to a movement essentially in Eastern direction with a small North component. It can be recognized from Figure 8 that the proposed algorithm enables a much more precise heading estimate than the code-based solution as our approach is solely based on the carrier phase, which is tracked with a centimeter accuracy and much less affected by multipath.

### 5. Instantaneous Re-Calibration of Newly Tracked Satellites

The phase correctors $\Delta\varphi_{corr}^{kl}$ can also be used for the instantaneous recalibration 26 of newly tracked satellites.

The carrier phase of a rising satellite can be instantaneously calibrated with the help of the already calibrated carrier phases. This instantaneous calibration of one double difference is based on equation (33), which shall be reused in this case:

$$\Delta\dot{\varphi}_{cal}^{kl}(t_i) = (\Delta\bar{e}^{kl}(t_i))^T \hat{b}(t_i), \qquad (47)$$

where $\Delta\bar{e}^{kl}(t_i)$ is obtained from the code solution with sufficient accuracy and $\hat{b}(t_i)$ is derived from the already calibrated phases.

### 6. Heading Estimation with Extended Kalman Filter

The accuracy of heading estimation in the calculation 25 from Figure 2 can further be improved by a state space model, that describes the inertia of the object 5, which will generally be a moving vehicle. The calibrated double difference carrier phase measurements are written for epoch $n$ as

$$\mathbf{z}_n = \begin{bmatrix} \varphi_{cal}^{12}(t_n) \\ \vdots \\ \varphi_{cal}^{1K}(t_n) \end{bmatrix} = \mathbf{h}_n(\mathbf{x}_n) + \mathbf{v}_n, \qquad (48)$$

which includes a non-linear mapping of the state vector $\mathbf{x}_n$ into measurement domain, and the measurement noise $\mathbf{v}_n$. The state vector $\mathbf{x}_n$ includes the heading and the rate of turn, and is given by

$$\mathbf{x}_n = \begin{bmatrix} \nu_{2,n} \\ \dot{\nu}_{2,n} \end{bmatrix} = \mathbf{\Phi}_{n-1}\mathbf{x}_{n-1} + \mathbf{w}_n, \qquad (49)$$

with the state transition matrix $\mathbf{\Phi}_n$ and the process noise $\mathbf{w}_n$. The measurement and state space model are combined in an extended Kalman filter for the estimation of $\mathbf{x}_n$. First, a state space prediction is performed, i.e.

$$\hat{\mathbf{x}}_{n+1}^- = \mathbf{\Phi}_n \hat{\mathbf{x}}_n^+$$
$$\mathbf{P}_{\hat{\mathbf{x}}_{n+1}^-} = \mathbf{\Phi}_n \mathbf{P}_{\hat{\mathbf{x}}_n^+} \mathbf{\Phi}_n^T + \mathbf{Q}_{n+1}, \qquad (50)$$

where the second row is obtained from error propagation with $\mathbf{Q}_{n+1}$ representing the process noise covariance matrix. This process noise will be adapted to the velocity of the moving object 5 as the feasible rate of turn reduces with increasing velocity. Once the new measurement is available, the state estimate is updated, i.e.

$$\hat{\mathbf{x}}_n^+ = \hat{\mathbf{x}}_n^- + \mathbf{K}_n \left( \mathbf{z}_n - \mathbf{h}_n(\hat{\mathbf{x}}_n^-) \right), \qquad (51)$$

where $\mathbf{K}_n$ is the Kalman gain, which is computed such that the variance of the norm of the a posteriori state estimate is minimized, i.e.

$$\mathbf{K}_n = \arg \min_{K_n} E\{\| \hat{\mathbf{x}}_n^+ - E\{\hat{\mathbf{x}}_n^+\} \|^2\}. \qquad (52)$$

This minimization of a variance of a trigonometric function of Gaussian random variables cannot be performed in closed form. Therefore, the function $\mathbf{h}_n(\mathbf{x}_n)$ shall linearized around an initial state $\mathbf{x}_0$, i.e.

$$\mathbf{h}_n(\mathbf{x}_n) = \mathbf{h}_n(\mathbf{x}_0) + \frac{\partial \mathbf{h}(\mathbf{x})}{\partial \nu_2}\bigg|_{\mathbf{x}=\mathbf{x}_0} \cdot (\nu_{2,n} - \nu_{2,0}) + \frac{\partial \mathbf{h}(\mathbf{x})}{\partial \dot{\nu}_2}\bigg|_{\mathbf{x}=\mathbf{x}_0} \cdot (\dot{\nu}_{2,n} - \dot{\nu}_{2,0}) \qquad (53)$$

where all partial derivatives can be computed in closed form, and are stacked into a single matrix:

$$\mathbf{H}_n = \begin{bmatrix} \dfrac{\partial \mathbf{h}}{\partial \nu_{2,n}}, & \dfrac{\partial \mathbf{h}}{\partial \dot{\nu}_{2,n}} \end{bmatrix}. \qquad (54)$$

This linearization of $\mathbf{h}_n(\mathbf{x}_n)$ enables the solution of (52) in closed form:

$$\mathbf{K}_n = \mathbf{P}_{\hat{\mathbf{x}}_n^-}\mathbf{H}_n^T \left( \mathbf{H}_n \mathbf{P}_{\hat{\mathbf{x}}_n^-}\mathbf{H}_n^T + \Sigma_n \right)^{-1}, \qquad (55)$$

where $\Sigma_n$ denotes the covariance matrix of the measurement noise $\mathbf{v}_n$. The innovation of the state update (51)

$$\mathbf{r}_n = \mathbf{z}_n - \mathbf{h}_n(\hat{\mathbf{x}}_n^-) \hspace{3cm} (56)$$

can also be used for jump detection, i.e. a jump is detected once $|\mathbf{r}_n^k|, \; k \in \{1,\ldots,K\}$ is above a certain threshold. The phases of one satellite can then easily be re-calibrated with the state prediction model of (49).

## 7. Advantages

The method described herein can be used for the estimation of the heading of a moving object using two low cost satellite navigation chips and antennas. These chips do not track the carrier phase reliably, so that frequent kinematic phase calibrations are required for the heading calculation. The proposed method comprises a kinematic phase calibration and a subsequent tracking of the heading based on the change of the carrier phases over time, i.e. there is no need to resolve the carrier phase integer ambiguities or to estimate any satellite biases. The carrier phase measurements are much less noisy and less affected by multipath than the code measurements, which enables a heading accuracy of 1° / baseline length [m], i.e. 1° for a baseline length of 1 m and 0.01° for a baseline length of 100 m.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds or groups described in conjunction with a particular aspect, embodiment or example of the invention are to be understood to be applicable to any other aspect, embodiment or example described herein unless incompatible therewith.

**References:**

[1] J. Wendel, Integrierte Navigationssysteme: Sensorfusion, GPS and Inertiale Navigation, Oldenbourg Verlag, 336 pp., 2007.

[2] P. Teunissen, The LAMBDA method for the GNSS compass, Art. Satellites, vol. 41, nr. 3, pp. 89-103, 2006.

[3] P. Teunissen, Integer least-squares theory for the GNSS compass, J. of Geodesy, vol. 84, pp. 433-447, 2010.

[4] P. Teunissen, The least-squares ambiguity decorrelation adjustment: a method for fast GPS ambiguity estimation, J. of Geodesy, vol. 70, pp. 65-82, 1995.

[5] Wikipedia, http://www.en.wikipedia.org / wiki / Inertial_navigation_system, called on January 28, 2012.

## Claims

1. Method for determining the heading of a moving object using at least two receivers (6) of a satellite navigation system (1), in which the receivers (6) are attached to a moving object (5), in which the receivers (6) perform code and phase measurements on signals emitted by satellites (2) of the satellite navigation system (1), and in which an evaluation unit (10) connected to the receivers (6) determines the heading of the moving object(5), wherein the evaluation unit (10) performs the step of:

   - determining subsequent absolute positions (30) of at least one receiver (6) based on code measurements of the at least one receiver (6);
   **characterized in that**
   the evaluation unit (10) further perfoms the steps of:
   - fitting a trajectory (31) to a series of the subsequent absolute positions (30),
   - calibrating a baseline (7) extending between one of the receivers (6) and another receiver (6) by using the trajectory (31) and a priori known information on positional parameters of the baseline (7) for determining unknown positional parameters of the baseline (7);

- using the positional parameters of the baseline (7) for calibrating double difference phase measurements of both receivers (6) by determining a phase corrector which eliminates phase ambiguities of the double difference phase measurements;
- calibrating double difference phase measurements by means of the phase corrector; and
- using the calibrated double difference phase measurements for determining the heading of the baseline (7).

2.  Method according to Claim 1,
    wherein the subsequent absolute positions (30) and the trajectory (31) are determined in geocentric, geodetic or local coordinates and/or wherein the trajectory (31) is approximated by a polynom having one of the coordinates as variable and wherein the polynom is fitted to the subsequent absolute positions (30).

3.  Method according to Claim 1 or 2,
    wherein the baseline (7) is calibrated by fixing the position of one of the two receivers (6) along the trajectory (31) and by searching for a position of the other receiver (6) along the trajectory (31) under the condition that at least one positional parameter excluding the heading assumes an a priori known value.

4.  Method according to Claim 3,
    wherein the position of the other receiver (6) is searched along the trajectory (31) under the condition that the length and the elevation of the baseline (7) assume a prior known values.

5.  Method according to any one of Claims 1 to 4,
    wherein, besides the phase ambiguities, the phase corrector also eliminates all other error terms including receiver and satellite clock offsets, receiver and satellite biases, and atmospheric errors.

6.  Method according to any one of Claims 1 to 5,
    wherein the phase corrector of a current measurement epoch is a mean value of phase correctors determined in previous measurement epochs.

7.  Method according to any one of Claims 1 to 6,
    wherein the heading of the baseline (7) is determined by an iterative least-squares estimation using a linearization of the double difference phase measurements around an initial value of the heading and using a priori information on at least one further positional parameters of the baseline (7).

8.  Method according to any one of Claims 1 to 7,
    wherein the changes of the double difference phase measurements are tracked after the double difference phase measurements have been calibrated and wherein the changes of the double difference phase measurements are monitored for phase slips and unexpected variations.

9.  Method according to Claim 8,
    wherein a change of the double difference phase measurements occurring within predefined boundaries around the value of a full phase cycle is treated as a phase slip and added to the phase corrector, and /or wherein a double difference phase measurement, whose phase change cannot be treated as a phase slip, is replaced by a value obtained from an extrapolation based on previous double difference phase measurements.

10. Method according to any one of Claims 1 to 9,
    wherein a double difference phase measurement, whose change with respect to a previous double difference phase measurement exceeds an expectation level, triggers a recalibration of the baseline and/or a recalibration of the double difference phase measurements.

11. Method according to Claim 10,
    wherein the expectation level decreases with increasing velocity of the moving object (5).

12. Method according to any one of Claims 1 to 11,
    wherein double phase difference phase measurements taking into account phase measurements on signals emitted by a newly tracked satellite (2) are calibrated using the calibrated baseline (7).

13. Method according to any one of Claims 1 to 12,
    wherein the heading of the baseline (7) and the rate of turn are determined by using a recursive state estimator, which uses the calibrated double difference phase measurements.

14. Method according to Claim 13,
wherein the recursive state estimator is an Extended Kalman filter, that determines the Kalman gain by a linearization of the double difference phase measurements around an initial value of the heading.

15. Apparatus for determining the heading of a moving object (5) using two receivers (6) of a satellite navigation system (1), in which both receivers (6) are attached to a moving object (5), in which the receivers (6) perform code and phase measurements on signals emitted by satellites (2) of the satellite navigation system (1), and in which an evaluation unit (10) connected to the receivers (6) determines the heading of the moving object (5)
**characterized in that**
the evaluation unit (10) is arranged for performing a method according to any one of Claims 1 to 14.

**Patentansprüche**

1. Verfahren zur Bestimmung der Bewegungsrichtung eines sich bewegenden Objekts mithilfe von wenigstens zwei Empfängern (6) eines Satellitennavigationssystems (1), bei dem die Empfänger (6) an einem sich bewegenden Objekt (5) angebracht sind, bei dem die Empfänger (6) Code- und Phasenmessungen an von Satelliten (2) des Satellitennavigationssystems (1) emittierten Signalen ausführen, und bei dem eine mit den Empfängern (6) verbundene Auswerteeinheit die Bewegungsrichtung der sich bewegenden Objekte (5) bestimmt, wobei die Auswerteeinheit (10) den Verfahrensschritt ausführt:

   - Bestimmen von aufeinanderfolgenden absoluten Positionen (30) von wenigstens einem Empfänger (6) auf der Grundlage von Codemessungen des wenigstens einen Empfängers (6); **dadurch gekennzeichnet, dass** die Auswerteeinheit weiterhin die Verfahrensschritte ausführt:
   - Anpassen einer Trajektorie (31) an eine Reihe von aufeinanderfolgenden absoluten Positionen (30);
   - Kalibrieren einer Basislinie (7), die sich zwischen einem der Empfänger (6) und einem anderen Empfänger (6) erstreckt, unter Verwendung der Trajektorie (31) und einer vorbekannten Information über Positionsparameter der Basislinie (7), um unbekannte Positionsparameter der Basislinie (7) zu bestimmen;
   - Verwenden der Positionsparameter der Basislinie (7), um Doppeldifferenz-Phasenmessungen von beiden Empfängern (6) zu kalibrieren, indem ein Phasenkorrektor bestimmt wird, der die Phasenmehrdeutigkeiten der Doppeldifferenz-Phasenmessungen eliminiert;
   - Kalibrieren von Doppeldifferenz-Phasenmessungen mithilfe des Phasenkorrektors; und
   - Verwenden der kalibrierten Doppeldifferenz-Phasenmessungen zum Bestimmen der Bewegungsrichtung der Basislinie (7).

2. Verfahren nach Anspruch 1,
bei dem die aufeinanderfolgenden absoluten Positionen (30) und die Trajektorie (31) in geozentrischen, geodätischen oder lokalen Koordinaten bestimmt werden und/oder bei dem die Trajektorie (31) durch ein Polynom angenähert wird, das wenigstens eine der Koordinaten als Variable enthält, und wobei das Polynom an die aufeinanderfolgenden absoluten Positionen (30) angepasst wird.

3. Verfahren nach Anspruch 1 oder 2,
bei dem die Basislinie (7) kalibriert wird, indem die Position von einem der beiden Empfänger (6) entlang der Trajektorie (31) fixiert wird und indem nach einer Position des anderen Empfängers (6) entlang der Trajektorie (31) unter der Bedingung gesucht wird, dass wenigstens ein Positionsparameter mit Ausnahme der Bewegungsrichtung einen vorbekannten Wert annimmt.

4. Verfahren nach Anspruch 3,
bei dem die Position des anderen Empfängers (6) entlang der Trajektorie (31) unter der Bedingung gesucht wird, dass die Länge und die Elevation der Basislinie (7) vorbekannte Werte annimmt.

5. Verfahren nach einem der Ansprüche 1 bis 4,
bei dem der Phasenkorrektor neben den Phasenmehrdeutigkeiten auch alle anderen Fehler eliminiert einschließlich Empfänger- und Satelliten-Uhrenfehler, systematischer Empfänger- und Satellitenfehler und atmosphärischer Fehler.

**6.** Verfahren nach einem der Ansprüche 1 bis 5,
bei dem der Phasenkorrektor einer gegenwärtigen Messepoche ein Mittelwert von Phasenkorrektoren ist, die in vorhergehenden Messepochen bestimmt worden sind.

**7.** Verfahren nach einem der Ansprüche 1 bis 6,
bei dem die Bewegungsrichtung der Basislinie (7) durch eine iterative Schätzung der kleinsten Quadrate bestimmt wird, indem eine Linearisierung der Doppeldifferenz-Phasenmessungen um einen anfänglichen Wert der Bewegungsrichtung verwendet wird und indem Vorwissen über wenigstens einen der weiteren Positionsparameter der Basislinie (7) verwendet wird.

**8.** Verfahren nach einem der Ansprüche 1 bis 7,
bei dem die Änderungen der Doppeldifferenz-Phasenmessungen verfolgt werden, nachdem die Doppeldifferenz-Phasenmessungen kalibriert worden sind, und bei dem die Änderungen der Doppeldifferenz-Phasenmessungen auf Phasensprünge und unerwartete Änderungen überwacht werden.

**9.** Verfahren nach Anspruch 8,
bei dem eine Änderung der Doppeldifferenz-Phasenmessung, die innerhalb vorbestimmter Grenzen um den Wert eines Phasenzyklus auftritt, als Phasensprung behandelt wird und zum Phasenkorrektor hinzugefügt wird und/oder bei dem eine Doppeldifferenz-Phasenmessung, deren Phasenänderungen nicht als Phasensprung behandelt werden kann, durch einen Wert ersetzt wird, der von einer Extrapolation auf der Grundlage von vorhergehenden Doppeldifferenz-Phasenmessungen erhalten worden ist.

**10.** Verfahren nach einem der Ansprüche 1 bis 9,
bei dem eine Doppeldifferenz-Phasenmessung, deren Änderung bezüglich einer vorhergehenden Doppeldifferenz-Phasenmessungen einen Erwartungswert übersteigt, eine Rekalibrierung der Basislinie und/oder eine Rekalibrierung der Doppeldifferenz-Phasenmessungen auslöst.

**11.** Verfahren nach Anspruch 10,
bei dem der Erwartungswert mit zunehmender Geschwindigkeit des sich bewegenden Objekts (5) abnimmt.

**12.** Verfahren nach einem der Ansprüche 1 bis 11,
bei dem Doppeldifferenz-Phasenmessungen, die Phasenmessungen an Signalen von einem neu verfolgten Satelliten (2) berücksichtigen, unter Verwendung der kalibrierten Basislinie (7) kalibriert werden.

**13.** Verfahren nach einem der Ansprüche 1 bis 12,
bei dem die Bewegungsrichtung der Basislinie (7) und die Drehgeschwindigkeit unter Verwendung eines rekursiven Zustandschätzers bestimmt werden, der die kalibrierten Doppeldifferenz-Phasenmessungen verwendet.

**14.** Verfahren nach Anspruch 13,
bei dem der rekursive Zustandschätzer ein erweiterter Kalmanfilter ist, der die Kalmanmatrix durch eine Linearisierung der Doppeldifferenz-Phasenmessungen um einen Anfangswert der Bewegungsrichtung bestimmt.

**15.** Vorrichtung zur Bestimmung der Bewegungsrichtung eines sich bewegenden Objekts (5) unter Verwendung von zwei Empfängern (6) eines Satellitennavigationssystems (1), bei dem beide Empfänger (6) an einem sich bewegenden Objekt (5) angebracht sind, bei dem die Empfänger (6) Code- und Phasenmessungen an von Satelliten (2) des Satellitennavigationssystems (1) emittierten Signalen ausführen und bei dem eine mit den Empfängern (6) verbundene Auswerteeinheit (10) die Bewegungsrichtung des sich bewegenden Objekts (5) bestimmt, **dadurch gekennzeichnet, dass** die Auswerteeinheit (10) zum Ausführen eines Verfahrens nach einem der Ansprüche 1 bis 14 eingerichtet ist.

**Revendications**

**1.** Un procédé de détermination du cap d'un objet mobile au moyen d'au moins deux récepteurs (6) d'un système de navigation par satellite (1), dans lequel les récepteurs (6) sont fixés à un objet mobile (5), dans lequel les récepteurs (6) exécutent des mesures de phase et de code sur des signaux émis par des satellites (2) du système de navigation par satellite (1), et dans lequel une unité d'évaluation (10) raccordée aux récepteurs (6) détermine le cap de l'objet mobile (5), dans lequel l'unité d'évaluation (10) exécute les opérations suivantes :

- la détermination de positions absolues subséquentes (30) d'au moins un récepteur (6) en fonction de mesures de code du au moins un récepteur (6), **caractérisé en ce que**

l'unité d'évaluation (10) exécute en outre les opérations suivantes :

- l'ajustement d'une trajectoire (31) à une série des positions absolues subséquentes (30),
- l'étalonnage d'une ligne de base (7) s'étendant entre l'un des récepteurs (6) et un autre récepteur (6) au moyen de la trajectoire (31) et d'informations connues a priori à propos de paramètres positionnels de la ligne de base (7) pour la détermination de paramètres positionnels inconnus de la ligne de base (7),
- l'utilisation des paramètres positionnels de la ligne de base (7) pour l'étalonnage de mesures de phase à double différence des deux récepteurs (6) par la détermination d'un correcteur de phase qui supprime des ambiguïtés de phase des mesures de phase à double différence,
- l'étalonnage de mesures de phase à double différence au moyen du correcteur de phase, et
- l'utilisation des mesures de phase à double différence calibrées pour la détermination du cap de la ligne de base (7).

2. Le procédé selon la Revendication 1,
dans lequel les positions absolues subséquentes (30) et la trajectoire (31) sont déterminées dans des coordonnées géocentriques, géodésiques ou locales et/ou dans lequel la trajectoire (31) est approximée par un polynôme possédant l'une des coordonnées en tant que variable et dans lequel le polynôme est ajusté aux positions absolues subséquentes (30).

3. Le procédé selon la Revendication 1 ou 2,
dans lequel la ligne de base (7) est étalonnée par la fixation de la position de l'un des deux récepteurs (6) le long de la trajectoire (31) et par la recherche d'une position de l'autre récepteur (6) le long de la trajectoire (31) à la condition qu'au moins un paramètre positionnel à l'exclusion du cap adopte une valeur connue a priori.

4. Le procédé selon la Revendication 3,
dans lequel la position de l'autre récepteur (6) est recherchée le long de la trajectoire (31) à la condition que la longueur et l'élévation de la ligne de base (7) adoptent des valeurs connues a priori.

5. Le procédé selon l'une quelconque des Revendications 1 à 4,
dans lequel, en plus des ambiguïtés de phase, le correcteur de phase supprime également tous les autres termes d'erreur y compris décalages d'horloge de récepteur et de satellite, biais de récepteur et de satellite et erreurs atmosphériques.

6. Le procédé selon l'une quelconque des Revendications 1 à 5,
dans lequel le correcteur de phase d'une époque de mesure actuelle est une valeur moyenne de correcteurs de phase déterminés dans des époques de mesure antérieures.

7. Le procédé selon l'une quelconque des Revendications 1 à 6,
dans lequel le cap de la ligne de base (7) est déterminé par une estimation de moindres carrés itérative au moyen d'une linéarisation des mesures de phase à double différence autour d'une valeur initiale du cap et au moyen d'informations a priori concernant au moins un autre paramètre positionnel de la ligne de base (7).

8. Le procédé selon l'une quelconque des Revendications 1 à 7,
dans lequel les modifications des mesures de phase à double différence font l'objet d'un suivi après que les mesures de phase à double différence aient été étalonnées et dans lequel les modifications des mesures de phase à double différence sont surveillées à la recherche de glissements de phase et de variations inattendues.

9. Le procédé selon la Revendication 8,
dans lequel une modification des mesures de phase à double différence se produisant à l'intérieur de limites prédéfinies autour de la valeur d'un cycle de phase complet est traitée en tant que glissement de phase et ajoutée au correcteur de phase, et/ou dans lequel une mesure de phase à double différence, dont la modification de phase ne peut pas être traitée en tant que glissement de phase, est remplacée par une valeur obtenue à partir d'une extrapolation basée sur des mesures de phase à double différence antérieures.

10. Le procédé selon l'une quelconque des Revendications 1 à 9,

dans lequel une mesure de phase à double différence, dont la modification par rapport à une mesure de phase à double différence antérieure dépasse un niveau attendu, déclenche un réétalonnage de la ligne de base et/ou un réétalonnage des mesures de phase à double différence.

**11.** Le procédé selon la Revendication 10,
dans lequel le niveau attendu diminue avec l'accroissement de la vélocité de l'objet mobile (5).

**12.** Le procédé selon l'une quelconque des Revendications 1 à 11,
dans lequel des mesures de phase à double différence prenant en compte des mesures de phase sur des signaux émis par un satellite nouvellement suivi (2) sont étalonnées au moyen de la ligne de base étalonnée (7).

**13.** Le procédé selon l'une quelconque des Revendications 1 à 12,
dans lequel le cap de la ligne de base (7) et le taux de virage sont déterminés au moyen d'un estimateur d'état récursif qui utilise les mesures de phase à double différence calibrées.

**14.** Le procédé selon la Revendication 13,
dans lequel l'estimateur d'état récursif est un filtre de Kalman élargi qui détermine le gain de Kalman par une linéarisation des mesures de phase à double différence autour d'une valeur initiale du cap.

**15.** Un appareil de détermination du cap d'un objet mobile (5) au moyen de deux récepteurs (6) d'un système de navigation par satellite (1), dans lequel les deux récepteurs (6) sont fixés à un objet mobile (5), dans lequel les récepteurs (6) exécutent des mesures de phase et de code sur des signaux émis par des satellites (2) du système de navigation par satellite (1), et dans lequel une unité d'évaluation (10) raccordée aux récepteurs (6) détermine le cap de l'objet mobile (5)
**caractérisé en ce que**
l'unité d'évaluation (10) est agencée de façon à exécuter un procédé selon l'une quelconque des Revendications 1 à 14.

FIG 1

# FIG 2

Start

processing of measurements from next epoch                    processing of measurements from next epoch

pseudorange measurements  →  Estimation of absolute receiver positions  ~ 13
navigation message  →  with iterative least squares method

absolute position estimates

a priori knowledge on
basisline length and elevation  →  Kinematic calibration of double difference phases  ~ 14
optional: map  →  based on polynomial fitting of receiver trajectory or map

calibrated baseline

Calibration successful ?  ~ 15

Yes                                                    No

19 ~ Number of calibrated satellites ?          16 ~ Previous calibration available ?          17

< 4                    ≥ 4                    Yes                    No

21 ~ Previous calibration available ?          Add new sat. to list of calibr. sat.          Ignore calibration of this epoch          Need for initial calibration

No                    Yes                    22          20          18

Need for initial calibration          Add new sat. to list of calibr. sat.

23

Coasting - detection and correction of cycle slips and phase jumps based on history of calibrated phases and their extrapolation  ~ 24

calibrated double difference carrier phases

a priori knowledge on
basisline length and elevation  →  Calculation of heading and rate of turn  →  heading and rate of turn
optional: state space model  →

25

direction vectors
from satellites to receivers  →  Instantaneous recalibration of newly tracked satellites  ~ 26

# FIG 3

absolute position estimates

27

flag for success
of calibration

optional: map →

Smoothing of receiver trajectory by
polynomial fitting or map matching of
absolute position estimates

smoothed receiver trajectory

a priori knowledge
of baseline length
and direction →

Kinematic calibration of baseline vector

28

calibrated baseline vector

direction vectors
from satellites
towards receivers →

Kinematic calibration of
double difference carrier phase measurements

29

calibrated double difference carrier phase measurements

# FIG 4

latitude, φ

30

fixed position
of first receiver

31

$$p_1 = \frac{\Delta\varphi}{\Delta\lambda}$$

$\varphi_{f,1}$

$p_0$

0°

$\lambda_{f,1}$

longitude, λ

## FIG 5

## FIG 6

# FIG 7

# FIG 8

**EP 2 624 013 B1**

### Patent documents cited in the description

- US 6259398 B
- US 5406489 A
- US 2005137799 A

### Non-patent literature cited in the description

- **J. WENDEL.** Integrierte Navigationssysteme: Sensorfusion, GPS and Inertiale Navigation. Oldenbourg Verlag, 2007, 336
- **P. TEUNISSEN.** The LAMBDA method for the GNSS compass. *Art. Satellites,* 2006, vol. 41 (3), 89-103
- **P. TEUNISSEN.** Integer least-squares theory for the GNSS compass. *J. of Geodesy,* 2010, vol. 84, 433-447
- **P. TEUNISSEN.** The least-squares ambiguity decorrelation adjustment: a method for fast GPS ambiguity estimation. *J. of Geodesy,* vol. 70, 65-82
- *Wikipedia,* 28 January 2012, http://www.en.wikipedia.org / wiki / Inertial_navigation_system